# EUROPÄISCHE PATENTSCHRIFT

(11) **EP 2 004 382 B1**
(45) Veröffentlichungstag und Bekanntmachung des Hinweises auf die Patenterteilung: **06.02.2019**
(21) Anmeldenummer: 07727643.4
(22) Anmeldetag: 02.04.2007
(51) Int. Cl.: B29C 45/28

(54) **HEIßKANALSPRITZGUSSWERKZEUG MIT NADELVERSCHLUSSDÜSE**
HOT RUNNER INJECTION MOLDING TOOL WITH NEEDLE VALVE NOZZLE
OUTIL DE MOULAGE PAR INJECTION À CANAUX CHAUDS AVEC BUSE DE FERMETURE À AIGUILLE

(30) Priorität: 18.08.2006 DE 202006012676 U
(43) Veröffentlichungstag der Anmeldung: 24.12.2008
(73) Patentinhaber: EWIKON Heißkanalsysteme GmbH, 35066 Frankenberg (Eder) (DE)
(72) Erfinder: BRAUN, Peter, 35410 Hungen (DE)
(74) Vertreter: Dantz, Jan Henning
(86) Internationale Anmeldenummer: PCT/EP2007/053171
(87) Internationale Veröffentlichungsnummer: WO 2007/115969

(56) Entgegenhaltungen:
- JP-A- 7 144 347
- JP-A- 7 251 428
- US-A- 4 595 552
- US-A1- 2003 068 404
- "Ewikon - Heißkanalforum mit Produktpremiere" PLASTVERARBEITER, [Online] 22. Mai 2006 (2006-05-22), Seite 1, XP002438954 Gefunden im Internet: URL:http://www.plastverarbeiter.de/news/6b 78fddafe9.html> [gefunden am 2007-06-22]
- "Hotline 2 / 2006" KUNDENZEITSCHRIFT EWIKON, [Online] Oktober 2006 (2006-10), Seiten 1-8, XP002438955 Gefunden im Internet: URL:http://www.ewikon.de/download/prospekt e/hotline_022006.pdf> [gefunden am 2007-06-22]

## Beschreibung

Die Erfindung betrifft ein Heißkanalspritzgusswerkzeug.

Die US 2003/068404 A1 zeigt ein Heißkanalspritzgusswerkzeug mit den Merkmalen a) bis f) des Anspruchs 1.

Zum technologischen Hintergrund werden noch die JP 7 144 347 A und die US 4 595 552 A genannt.

Die DE 10 2005 024 331 A1 zeigt eine Nadelverschlussdüse für ein Heißkanalspritzgusswerkzeug mit parallel verlaufendem Strömungskanal der Düse und der Betätigungsrichtung der Verschlussnadel.

Die Jap. Patentabstracts 07-251428 und die JP 7 251 428 A zeigen Nadelverschlussdüse für ein Heißkanalspritzgusswerkzeug mit den Merkmalen a) bis c) des Anspruchs 1 und mit winklig zum Strömungskanal angeordneter Verschlussnadel. Bei winklig zum Strömungskanal verlaufender Verschlussnadel treten Probleme auf, da sie in Wirkverbindung mit unterschiedlich temperierten Bauteilen eines Heißkanalspritzgießwerkzeuges steht bzw. diese durchquert.

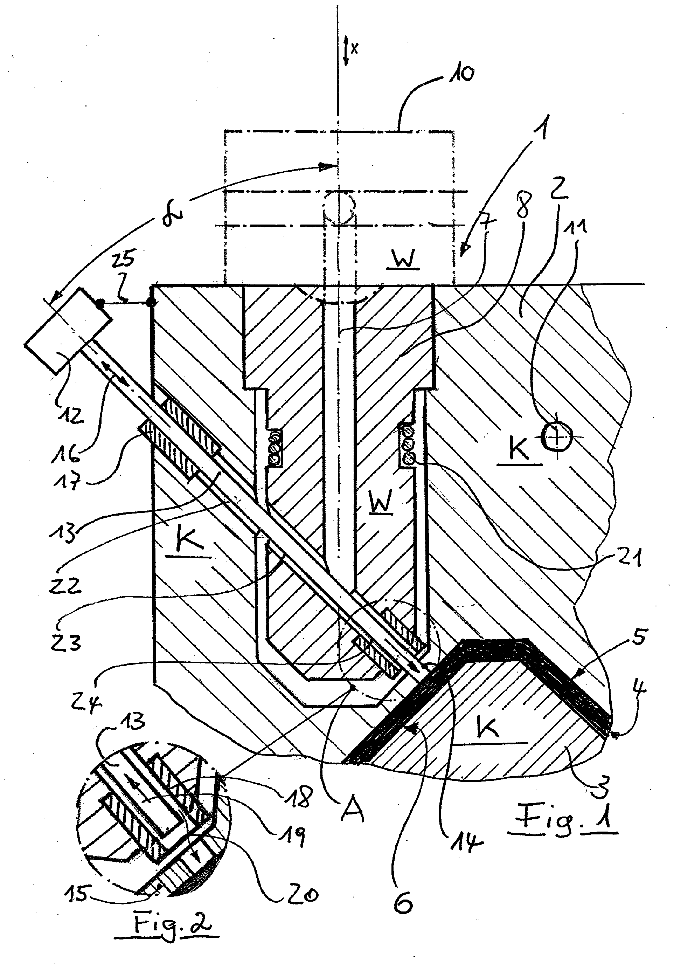

Ein Heißkanalspritzgießwerkzeug besteht einerseits in der Regel aus Bauelementen, die den Formhohlraum ausbilden und wegen der gewünschten kurzen Erstarrungszeit der Schmelze mittels geeigneter Medien gekühlt werden, in Figur 1 mit K bezeichnet, und andererseits aus Bauelementen, die die Schmelze führen und leiten, in Figur 1 mit W bezeichnet. Da im Gegensatz zu den gekühlten Bauelementen die mit der Schmelze in Berührung kommenden Bauelemente die Schmelze nicht abkühlen dürfen, sind diese Bauelemente beheizt.

Der Umstand, dass Bereiche eines Heißkanalspritzgießwerkzeuges wie zuvor erläutert betriebsbedingt unterschiedliche Temperaturen aufweisen, führt dazu, dass sich Verschiebungen aufgrund unterschiedlicher thermischer Ausdehnungen ergeben. Dieses führt insbesondere bei Nadelverschlussdüsen mit zum Strömungskanal nicht parallel verlaufenden Betätigungsrichtungen der Nadel oft dazu, dass die Verschlussnadel und der mit ihr den Verschluss bildenden Dichtsitz in der die Kavität bildenden Betätigungswand der Formplatte axial nicht fluchten.

Es ist die Aufgabe der Erfindung, diesen Nachteil zu beheben.

Die Erfindung löst diese Aufgabe durch den Gegenstand des Anspruchs 1.

Vorteilhafte Ausgestaltungen der Erfindung sind den Unteransprüchen zu entnehmen.

Die Erfindung wird durch die zeichnerischen Darstellungen und die nachfolgende Beschreibung erläutert.

Es zeigen:
- Figur 1: in schematischer Darstellung einen Querschnitt durch ein Heißkanalspritzgießwerkzeug in der Arbeitsstellung einer geschlossenen Verschlussnadel;
- Figur 2: einen Ausschnitt gemäß Einzelheit A in Figur 1, in der Arbeitsstellung einer geöffneten Verschlussnadel;
- Figur 3: eine Schnittansicht eines Ausschnitts eines weiteren Heißkanalspritzgießwerkstücks mit geschlossener Verschlussnadel;
- Figur 4: eine Ausschnittsvergrößerung aus Figur 3;
- Figur 5: einen Schnitt durch eine drittes - erfinderisches - Heißkanalspritzgießwerkzeug in der Arbeitsstellung einer geschlossenen Verschlussnadel;
- Figur 6: eine Ausschnittsvergrößerung aus Figur 5;
- Figur 7 bis 9: verschiedene weitere perspektivische zum Teil geschnittene Ansichten des Ausführungsbeispiels aus Figur 5.

Dem Fachmann sind Heißkanalspritzgusswerkzeuge bzw. Heißkanalspritzgießwerkzeuge in den verschiedensten Bauarten hinlänglich bekannt, so dass hierauf im Einzelnen nicht eingegangen wird.

Figur 1 zeigt die wesentlichen Bauelemente eines Heißkanalspritzgusswerkzeuges 1, bestehend aus den wesentlichen Bauteilen Formplatte 2 und Formkern 3, welche einen nur teilweise dargestellten Hohlraum (Kavität) 4 ausbilden, der dem Spritzling 5 im erstarrten Zustand seine Form verleiht.

Es wird ein Spritzling beschrieben, der eine zum Strömungskanal 7 der Heißkanaldüse 8 winklig verlaufende Wandung 6 aufweist.

Die Schmelze tritt in das Heißkanalspritzgusswerkzeug 1 entweder durch eine nicht dargestellte, mit der Spritzgussmaschine verbundene Düse in die Heißkanaldüse 8 ein oder wird über einen Heißkanalverteiler 10 der Heißkanaldüse 8 zugeführt.

Die Temperaturverteilung in den zeichnerisch dargestellten Bauteilen des Heißkanalspritzgusswerkzeuges ist so geführt, dass die Formplatte 2 das kühlere Bauteil, relativ zur Heißkanaldüse 8, darstellt, welche wahlweise von Kühlkanälen 11 durchdrungen ist. Die Heißkanaldüse 8 ist dagegen beheizt. Diese Heizung ist schematisch durch Heizwendeln 21 angedeutet.

Die Verschlussnadel 13 ist mit ihrem der Heißkanaldüse 8 abgewandten Ende mit einer Betätigungseinrichtung 12 verbunden, die nach dem bekannten Stand der Technik ausgebildet sein kann und die Verschlussnadel 13 in die Richtungen des Doppelpfeiles bewegen kann. Mit der Linie 25 soll angedeutet sein, dass die Betätigungseinrichtung 12 mit dem Heißkanalspritzgießwerkzeug maschinenbaumäßig verbunden ist.

In Figur 1 ist die Nadel in Verschlussstellung gezeigt, wobei sie in die Wand 15 der Formplatte 2 eintaucht und einen Dichtsitz 14 herbeiführt. Der Spritzling 5 ist so vom Strömungskanal 7 sowie den Spalten 22 bis 24 getrennt.

In Figur 2 ist die Einzelheit A gemäß Figur 1 mit einer Verschlussnadel 13 nach einer Bewegung in Pfeilrichtung 19 in geöffneter Stellung dargestellt, wodurch ein Fließweg 20 gebildet wird, über den der Formhohlraum mit Schmelze gefüllt werden kann.

Die Figuren verdeutlichen den Erfindungsgedanken dieser Anmeldung sehr deutlich.

Die Verschlussnadel 13 wird - abgesehen von der Betätigungseinrichtung 12 - ausschließlich von der kühleren Formplatte 2 in Position gehalten. Die Führungs- und Dichthülse 17 sitzt in der kühleren Formplatte 2, wobei es sich vorteilhafterweise um eine Schraubverbindung handeln kann. Diese Führungs- und Dichtbuchse nimmt die Temperatur der kühleren Formplatte an und ist deshalb ebenfalls als kühl zu betrachten.

Am freien Ende der Verschlussnadel ist eine weitere Buchse 18 erkennbar. Diese dient als Wärmeleithülse und steht nicht mit der Verschlussnadel in Berührung, sondern dient der Wärmeleitung von der beheizten Heißkanaldüse 8 soweit wie möglich bis an die Wand 15, um ein unvorteilhaftes Abkühlen der Schmelze im Bereich der Wand 15 vor Eintritt in den Formhohlraum zu verhindern.

So wird deutlich, dass die Verschlussnadel lediglich mit kühlen Bereichen der Formplatte 2 Berührungskontakt hat. Einerseits mit der kühlen Führungs- und Dichtbuchse 17 und andererseits durch Berührung mit der Wand 15, mit der sie einen Dichtsitz bildet.

Die Konstruktion ist nicht auf einen bestimmten Winkel zwischen der Verschlussnadel 13 und dem Strömungskanal 7 beschränkt. So liegt es im Rahmen der Konstruktion, den Winkel über den zeichnerisch dargestellten Winkel von ca. 45° sowohl größer als auch kleiner auszubilden, ohne den Erfindungsgedanken zu verlassen.

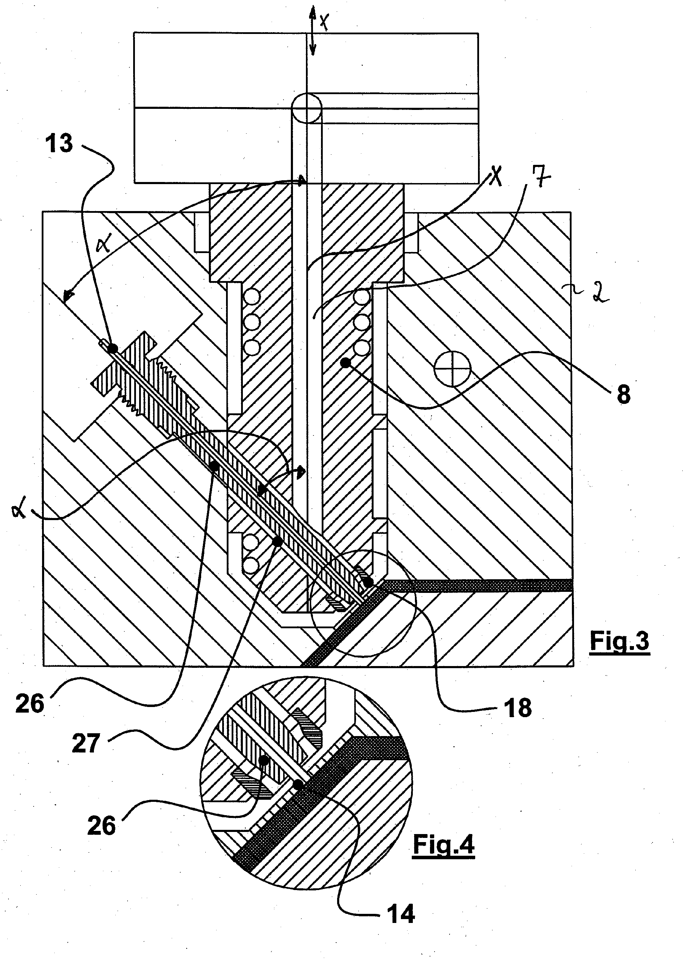

Die Figuren 3 und 4 zeigen ein weiteres Ausführungsbeispiel, bei dem sich die Verschlussnadel 13 wiederum in der Verschlussstellung befindet, in der sie an zwei voneinander beabstandeten Stellen in der kühleren Formplatte 2 in Position gehalten wird.

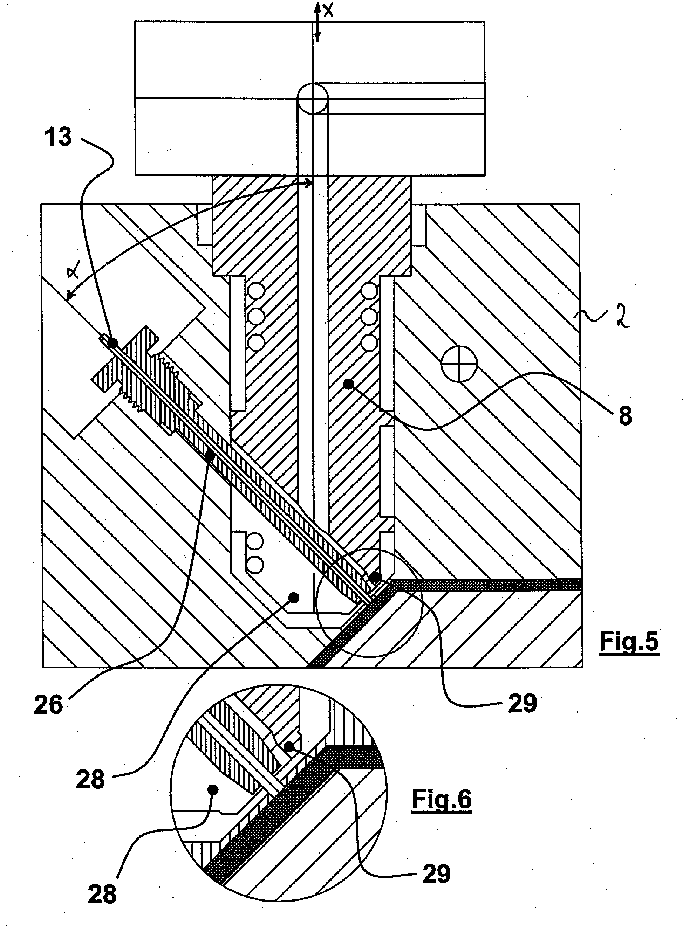

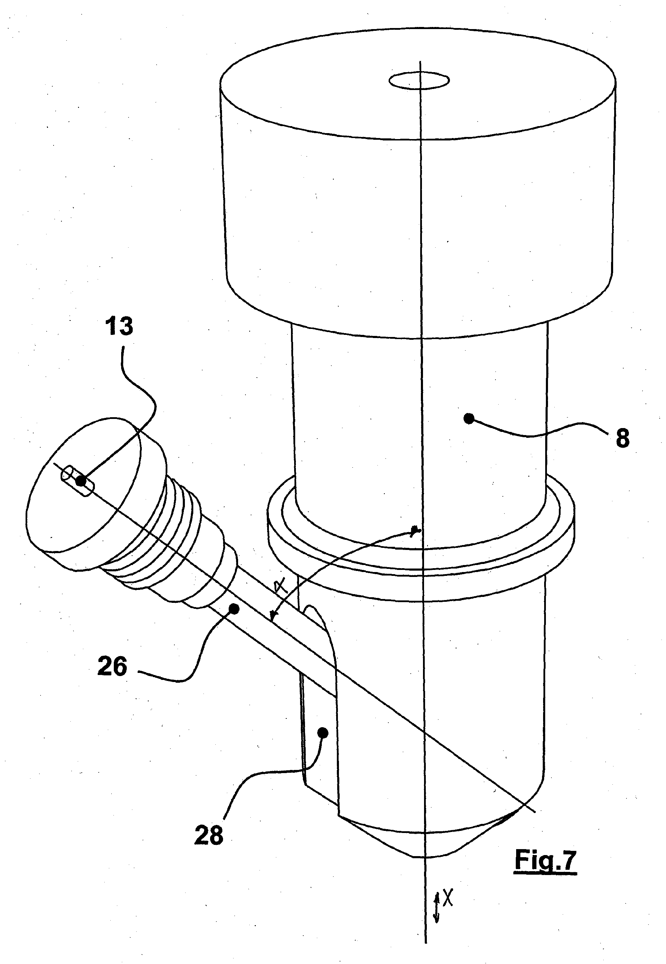

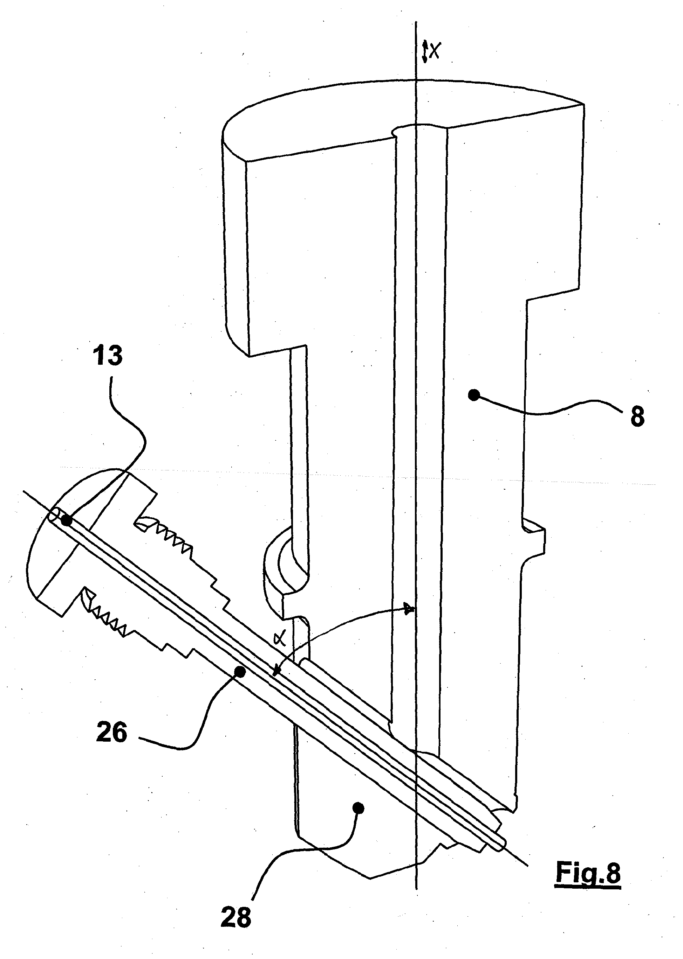

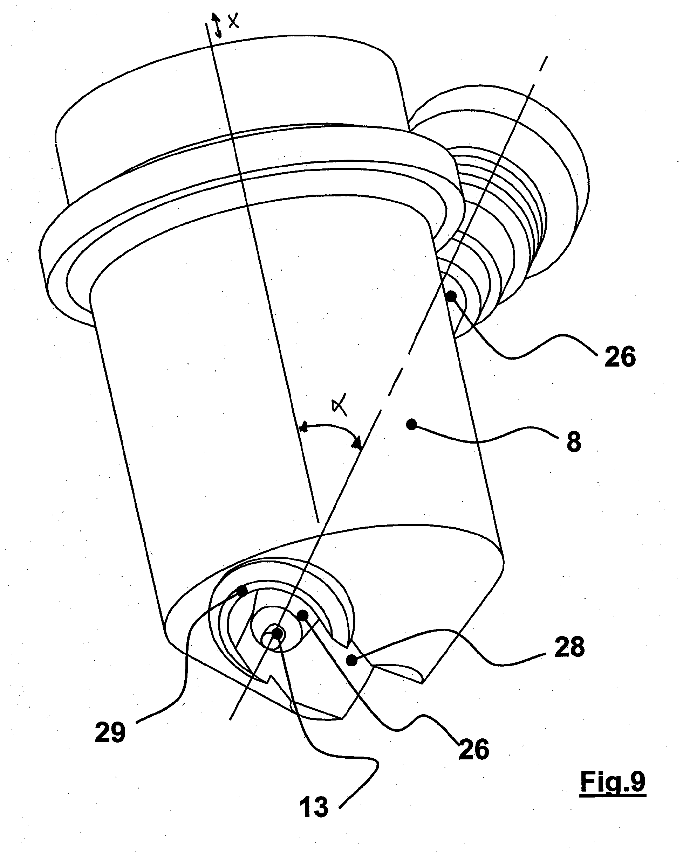

Die Verschlussnadel 13 und die hier im Vergleich zu Fig. 1 längere Führungs- und Dichthülse 26 (Nadelführung) durchsetzen hierbei eine Durchtrittsbohrung 27 (Figuren 3 und 4) oder einen Spalt 28 (Figuren 5 bis 9) in der Heißkanaldüse 8, wobei die Verschlussnadel in einem Winkel α > 0° und vorzugsweise < 90°, insbesondere α 30 bis 60°, vorzugsweise α = 45° zur Längserstreckungsachse X der Heißkanaldüse 8 bzw. zum Strömungskanal 7 ausgerichtet ist. Die Verschlussnadel 13 durchsetzt dabei in der Verschlussstellung unter dem Winkel α die Heißkanaldüse 8 vollständig. In der Verschlussstellung wird zudem ein Dichtsitz 14 zur Formplatte 2 gebildet, in welche das freie Ende der Verschlussnadel 13 in dieser Stellung eintaucht.

Die Verschlussnadel 13 ist an ihrem vom Dichtsitz 14 - bezogen auf die Verschlussstellung - abgewandten Ende wiederum mit einer Führungs- und Dichthülse 26 in der kühleren Formplatte 2 gehalten, wobei sich die Führungs- und Dichthülse 26 hier bis in die Durchtrittsbohrung 27 oder die Nut 28 der Heißkanaldüse 8 hinein erstreckt, und zwar vorzugsweise bis in den Bereich der weiteren Buchse 18 hinein, die als Wärmeleithülse dient. Die Nadelführung bzw. Führungs- und Dichthülse 26 kann sich auch bis kurz vor die Buchse 18 oder bis über die Buchse 18 hinaus erstrecken, und zwar bis kurz vor den Dichtsitz 14.

Die derart verlängerte Führungs- und Dichthülse 26 optimiert bzw. verstärkt die Führung der Verschlussnadel 13 und stabilisiert diese weiter in Richtung der zweiten Führungsposition am Dichtsitz 14.

Zur Vereinfachung der Montage und Demontage der Heißkanaldüse bzw. der Verschlussnadel 13 kann anstelle einer Durchtrittsbohrung 27 die Heißkanaldüse auch mit einer schräg eingebrachten Nut 28 (siehe Fig. 5 bis 9) versehen werden.

Dies hat den Vorteil, dass ein Ein- und Ausbau der Heißkanaldüse 8 möglich ist, ohne die Verschlussnadel 13 inkl. ihrer Nadelführung 26, siehe z.B. Figur 5, demontieren zu müssen.

Das eingesetzte Wärmeleitelement - Buchse 18 - nach Figur 1 bis 3 kann - insbesondere bei der Nutausführung der Fig. 5 - auch als integraler Bestandteil des Düsenkörpers 8 als Wärmeleitfortsatz 29 ausgebildet sein.

**Bezugszeichen**

| | |
|---|---|
| Heißkanalspritzgusswerkzeug | 1 |
| Formplatte | 2 |
| Formkern | 3 |
| Hohlraum | 4 |
| Spritzling | 5 |
| Wandung | 6 |
| Strömungskanal | 7 |
| Heißkanaldüse | 8 |
| Heißkanalverteiler | 10 |
| Kühlkanal | 11 |
| Betätigungseinrichtung | 12 |
| Verschlussnadel | 13 |
| Dichtsitz | 14 |
| Wand | 15 |
| Führungs- und Dichthülse | 17, 26 |
| Buchse | 18 |
| Pfeilrichtung | 19 |
| Heizwendel | 21 |
| Spalte | 22, 23, 24 |
| Linie | 25 |
| Durchtrittsbohrung | 27 |
| Spalt | 28 |
| Wärmeleitfortsatz | 29 |

## Patentansprüche

1. Heißkanalspritzgusswerkzeug
a. mit einer Heißkanaldüse (8), die einen Strömungskanal (7) aufweist,
b. mit einer relativ zur Heißkanaldüse (8) kühleren Formplatte (2),
c. mit einer mittels eines/r Kraftantriebes/Betätigungseinrichtung betätigten Nadelverschlussdüse mit einer Führungs- und Dichthülse (17, 26) und mit einer Verschlussnadel (13), wobei die Nadelverschlussdüse in dem Heißkanalspritzgusswerkzeug angeordnet ist,
d. wobei eine Betätigungsrichtung der Verschlussnadel (13) und eine Richtung des Strömungskanals (7) der Heißkanaldüse (8) voneinander abweichen,
e. wobei die Verschlussnadel (13), abgesehen von der Betätigungseinrichtung (12), in einer Schließstellung ausschließlich von der kühleren Formplatte (2) an mindestens zwei voneinander beabstandeten Stellen in Position gehalten wird,
f. wobei eine der mindestens zwei Stellen durch die Führungs- und Dichthülse (17, 26) gebildet ist, die in der kühleren Formplatte (2) sitzt, und
g. wobei sich die Führungs- und Dichthülse (17, 26) bis in die Heißkanaldüse (8) hinein erstreckt, ohne diese zu berühren, so dass ein Spalt zwischen der Führungs- und Dichthülse (17, 26) und der Heißkanaldüse (8) verbleibt.

2. Heißkanalspritzgusswerkzeug nach Anspruch 1, **dadurch gekennzeichnet, dass** es sich bei dem Sitz der Führungs- und Dichthülse (17, 26) in der kühleren Formplatte (2) um eine ein- oder mehrteilig ausgebildete Schraubverbindung handelt.

3. Heißkanalspritzgusswerkzeug nach einem der vorstehenden Ansprüche, **dadurch gekennzeichnet, dass** eine zweite Stelle der mindestens zwei Stellen durch den Dichtsitz (14) der Verschlussnadel (13) gebildet wird, wenn sich die Verschlussnadel in Schließrichtung befindet.

4. Heißkanalspritzgusswerkzeug nach einem der vorstehenden Ansprüche, **dadurch gekennzeichnet, dass** sich die Führungs- und Dichthülse (17, 26) bis in den Bereich eines Wärmeleitelements, insbesondere einer Buchse (18), erstreckt.

5. Heißkanalspritzgusswerkzeug nach einem der vorstehenden Ansprüche, **dadurch gekennzeichnet, dass** sich die Führungs- und Dichthülse (17, 26) bis vor den Dichtsitz (14) der Verschlussnadel (13) in der Verschlussstellung erstreckt.

6. Heißkanalspritzgusswerkzeug nach einem der vorstehenden Ansprüche, **dadurch gekennzeichnet, dass** die Heißkanaldüse mit einer Durchtrittsbohrung (27) versehen ist, die in einem Winkel > 0°, insbesondere in einem Winkel α 30° bis 60°, vorzugsweise in einem Winkel α bei 45° zu einer Längserstreckungsachse (X) der Heißkanaldüse (8) ausgerichtet ist.

7. Heißkanalspritzgusswerkzeug nach einem der vorstehenden Ansprüche, **dadurch gekennzeichnet, dass** die Heißkanaldüse eine in einem Winkel (α) größer 0° schräg zu einer Längserstreckungsachse (X) der Heißkanaldüse (8) eingebrachte seitliche Nut (28) aufweist.

8. Heißkanalspritzgusswerkzeug nach einem der vorstehenden Ansprüche, **dadurch gekennzeichnet, dass** die Verschlussnadel (13) mittels einer Führungs- und Dichthülse (17, 26) in der Formplatte (2) in Position gehalten ist.

## Claims

1. A hot-runner injection molding tool
a. with a hot-runner nozzle (8) comprising a flow channel (7),
b. with a mold plate (2) relatively cooler to the hot-runner nozzle (8),
c. with a needle valve nozzle, actuated by means of a power-operated mechanism/actuating device, having a guiding and sealing sleeve (17, 26) and having a shut-off needle (13), wherein the needle valve nozzle is arranged in the hot-runner injection molding tool,
d. wherein an actuating direction of the shut-off needle (13) and a direction of the flow channel (7) of the hot-runner nozzle (8) differ from each other,
e. wherein apart from the actuating device (12), the shut-off needle (13) is held in place in the closed position exclusively by the cooler mold plate (2) at at least two spaced-apart locations,
f. wherein one of the at least two locations is formed by the guiding and sealing sleeve (17, 26), which is seated in the cooler mold plate (2), and
g. wherein the guiding and sealing sleeve (17, 26) extends into the hot-runner nozzle (8) without contacting it, so that a gap remains between the guiding and sealing sleeve (17, 26) and the hot-runner nozzle (8).

2. The hot-runner injection molding tool as claimed in claim 1, **characterized in that** the seat of the guiding and sealing sleeve (17, 26) in the cooler mold plate (2) is a screw connection of a one-part or multi-part form.

3. The hot-runner injection molding tool as claimed in one of the preceding claims, **characterized in that** a second location of the at least two locations is formed by the sealing seat (14) of the shut-off nozzle (13) when the shut-off nozzle is in the closing direction.

4. The hot-runner injection molding tool as claimed in one of the preceding claims, **characterized in that** the guiding and sealing sleeve (17, 26) extends into the region of a heat conducting element, in particular a bushing (18).

5. The hot-runner injection molding tool as claimed in one of the preceding claims, **characterized in that** the guiding and sealing sleeve (17, 26) extends to just before the sealing seat (14) of the shut-off nozzle (13) in the closed position.

6. The hot-runner injection molding tool as claimed in one of the preceding claims, **characterized in that** the hot-runner nozzle is provided with a through-bore (27), which is aligned at an angle > 0°, in particular at an angle α of 30° to 60°, preferably at an angle α of 45°, in relation to an axis of longitudinal extent (X) of the hot-runner nozzle (8).

7. The hot-runner injection molding tool as claimed in one of the preceding claims, **characterized in that** the hot-runner nozzle has a lateral groove (28) introduced obliquely in relation to an axis of longitudinal extent (X) of the hot-runner nozzle (8) at an angle (α) greater than 0°.

8. The hot-runner injection molding tool as claimed in one of the preceding claims, **characterized in that** the shut-off nozzle (13) is held in place by means of a guiding and sealing sleeve (17, 26) in the mold plate (2).

## Revendications

1. Outil de moulage par injection à canal chaud
a. avec une buse à canal chaud (8) qui présente un canal d'écoulement (7),
b. avec une plaque de moule (2) plus froide par rapport à la buse à canal chaud (8),
c. avec une buse à obturateur à aiguille actionnée au moyen d'un entraînement mécanique/dispositif d'actionnement et comportant un manchon de guidage et d'étanchéité (17, 26) et une aiguille d'obturation (13), la buse à obturateur à aiguille étant disposée dans l'outil de moulage par injection à canal chaud,
d. dans lequel une direction d'actionnement de l'aiguille d'obturation (13) et une direction du canal d'écoulement (7) de la buse à canal chaud (8) diffèrent l'une de l'autre,
e. dans lequel, dans une position fermée, l'aiguille d'obturation (13), en dehors du dispositif d'actionnement (12), est maintenue en position exclusivement par la plaque de moule plus froide (2) à au moins deux endroits espacés l'un de l'autre,
f. dans lequel l'un desdits au moins deux endroits est formé par le manchon de guidage et d'étanchéité (17, 26) situé dans la plaque de moule plus froide (2), et
g. dans lequel le manchon de guidage et d'étanchéité (17, 26) s'étend jusque dans la buse à canal chaud (8) sans la toucher, de sorte qu'il reste un espace entre le manchon de guidage et d'étanchéité (17, 26) et la buse à canal chaud (8).

2. Outil de moulage par injection à canal chaud selon la revendication 1, **caractérisé en ce que** le siège du manchon de guidage et d'étanchéité (17, 26) dans la plaque de moule plus froide (2) est un raccord vissé réalisé en une ou plusieurs parties.

3. Outil de moulage par injection à canal chaud selon l'une des revendications précédentes, **caractérisé en ce qu'**un deuxième endroit desdits au moins deux endroits est formé par le siège d'étanchéité (14) de l'aiguille d'obturation (13) lorsque l'aiguille d'obturation se trouve dans la direction de fermeture.

4. Outil de moulage par injection à canal chaud selon l'une des revendications précédentes, **caractérisé en ce que** le manchon de guidage et d'étanchéité (17, 26) s'étend jusque dans la zone d'un élément conducteur de chaleur, en particulier d'une douille (18).

5. Outil de moulage par injection à canal chaud selon l'une des revendications précédentes, **caractérisé en ce que** le manchon de guidage et d'étanchéité (17, 26) s'étend jusque devant le siège d'étanchéité (14) de l'aiguille d'obturation (13) dans la position fermée.

6. Outil de moulage par injection à canal chaud selon l'une des revendications précédentes, **caractérisé en ce que** la buse à canal chaud est munie d'un trou traversant (27) qui est orienté à un angle > 0°, en particulier à un angle α de 30° à 60°, de préférence à un angle α de 45° par rapport à un axe d'extension longitudinale (X) de la buse à canal chaud (8).

7. Outil de moulage par injection à canal chaud selon l'une des revendications précédentes, **caractérisé en ce que** la buse à canal chaud présente une rainure latérale (28) pratiquée à un angle (α) supérieur à 0° obliquement par rapport à un axe d'extension longitudinale (X) de la buse à canal chaud (8).

8. Outil de moulage par injection à canal chaud selon l'une des revendications précédentes, **caractérisé en ce que** l'aiguille d'obturation (13) est maintenue en position dans la plaque de moule (2) au moyen d'un manchon de guidage et d'étanchéité (17, 26).
